# EUROPEAN PATENT APPLICATION

(11) **EP 2 392 986 A2**
(43) Date of publication of application: **07.12.2011**
(21) Application number: 10170640.6
(22) Date of filing: 23.07.2010
(51) Int. Cl.: G06F 1/16

(54) **A case for tablet personal computer**

(30) Priority: 03.06.2010 KR 20100052442
(71) Applicant: Kum Oh Electronics Co., Ltd, Gyeonggi-do 420-120 (KR); Mozen CnA Co. Ltd., Seoul 150-042 (KR)
(72) Inventor: Kim, Ki Sang, Siheung-si Gyenggi-do 429-430 (KR); Kim, Hyun Suk, Seoul 136-112 (KR)
(74) Representative: Raimondi, Adriana

(57) **Abstract**

A case of tablet PC having a display area on the front side comprises; a housing 10 made of hard material to receive the tablet PC 1 as the front side display of it is exposed, including a first housing part 20 having the first hinge 21 on one side and the second hinge 23 on the other side, and a second housing part 30 hinged on the second hinge 23 of the first housing part 20 to be rotated toward the back side of the first housing part 20, and a cover 40 made of hard material and hinged on the first hinge 21 of the housing 10 on one side to open and close the front side display of the tablet PC 1 and having a stopper projection 41 on the other side, the second housing part 30 including side walls 12 to wrap around the side of the tablet PC 1, and the side walls 12 having inward projections 13 to cover the front edge of the tablet PC.

## Description

### Background of the Invention

### Field of the Invention

The invention relates to a case for tablet personal computer, and more particularly to a case for tablet personal computer having simple and smart structure and reliable locking mechanism to prevent the damage of LCD or body due to the unwanted opening or dropping of the case.

### Description of the Related Art

Personal computers are being widely used. But as people more use the computer outsides, the desire for more easily portable personal computer is increased. But the conventional notebook computers are inconvenient because they have relatively big size and heavy weight. Meanwhile, smart phone has the function of internet connection as well as phone calling. Though the smart phone is easily portable, the display area of the smart phone is relatively small to sufficiently display the page of internet web site.

Recently, Apple Inc. launched tablet personal computer called '1-PAD', which has the touch pad as an input means instead of the key board. It has LCD display of 9 inch size. It has the advantages of easy portability and sufficient size of display. But the tablet personal computer can be easily damaged by the impact, so it needs a protective case. Especially the LCD panel on the front side of the tablet PC may be broken or scratched even by small impact. And, as the tablet PC has the shape of rectangular plate, the user should hang down his head in order to view the LCD display of the tablet PC if the tablet PC is placed on the table without any support means, which is uncomfortable. Therefore, it needs a support means to support the tablet PC with the proper angle so that the LCD display of the tablet PC can be viewed by the user with easy posture.

In addition, it is preferable if the protective case of the tablet PC may not conceal the logo marked on the outer housing of the tablet PC, because the logo may have attractive appearance and show the quality of the product and reputation of the maker.

### Summary of the Invention

The present invention has been made in view of the above problems, and thus has the object of providing a case for tablet PC with simple structure and smart appearance which could support the tablet PC in inclined position without any other support means, and the cover and the housing of the case can be locked by one touch operation to achieve easy receiving and drawing, and it could be prevented from unwanted opening to protect the tablet PC safely. The invention has another object of providing a case for tablet PC in which the symbol logo marked on the surface of the housing of the tablet PC can be easily recognized from outsides.

To achieve the above objects, there is provided a case of tablet PC having a display area on the front side which comprises;
a housing made of hard material to receive the tablet PC as the front side display of it is exposed, including a first housing part having the first hinge on one side and the second hinge on the other side, and a second housing part hinged on the second hinge of the first housing part to be rotated toward the back side of the first housing part, and
a cover made of hard material and hinged on the first hinge of the housing on one side to open and close the front side display of the tablet PC and having a stopper projection on the other side,
the second housing part including side walls to wrap around the side of the tablet PC , and the side walls having inward projections to cover the front edge of the tablet PC,
so that when the cover is released from the housing and placed on the surface of the table, and the second housing part is rotated around the second hinge, then the tablet PC is rotated together with the second housing part until the lower end of the tablet PC is stopped at the stopper projection of the cover, then the tablet PC should be supported in the inclined state as the first housing part supports the tablet PC in an angled position.

Preferably but not necessarily, the stopper projection of the cover can be engaged with the side wall of the second housing part in the manner of one touch engagement when the cover is closed to the housing.

Preferably but not necessarily, and a projection part is formed on the first housing part or the second housing part to cover the symbol logo formed on the back surface of the tablet PC, and a recess mated to the projection part is formed on the second housing part or the first housing part, and a transmissive window or an opening is formed at the projection part.

### Brief Description of the Drawings

FIG. 1 is a perspective of the preferred embodiment of the invention
FIG. 2 is a bottom view of the embodiment of FIG. 1
FIG. 3 is a perspective of the embodiment in which the tablet PC is supported
FIG. 4 is a view of operation of the embodiment

### Detailed Description of the Invention

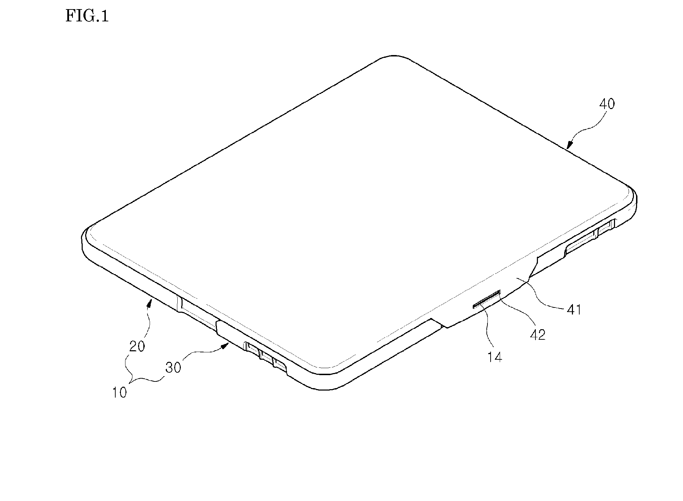

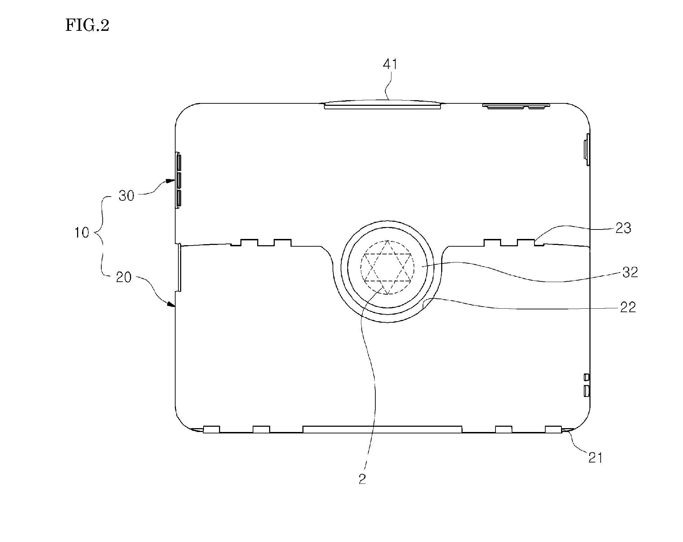

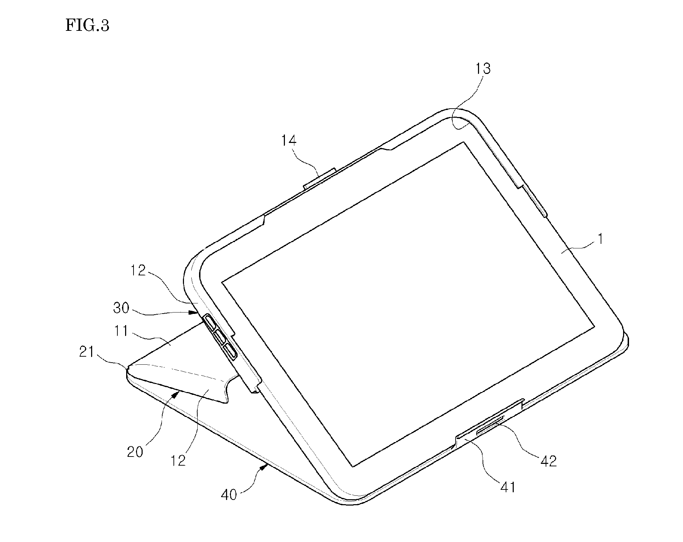

Referring to FIG. 1 to 4, the case of tablet PC according to the preferred embodiment of the invention is made of hard material such as hard plastic and comprises a housing 10 which can receive a tablet PC 1 as the front side display of it is exposed, and including a first housing part 20 having the first hinge 21 on one side and the second hinge 23 on the other side, and a second housing part 30 hinged on the second hinge 23 of the first housing part 20; and a cover 40 made of hard material such as hard plastic and hinged on the first hinge 21 of the housing 10 on one side of it to open and close the front side display of the tablet PC 1 and having a stopper projection 41 projecting upright on the other side of it.

The housing 10 includes a rectangular rear board 11 and side walls 12 projecting forward from the periphery of the rear board 11 to wrap around the side of the tablet PC. The housing 10 includes a first housing part 20 and the second housing part 30. The first housing part 20 has a first hinge 21 at one side and a recess 22 at the other side. The second housing part 30 has a projection part 32 mated to the recess 22 of the first housing part 20. As the projection part 32 mates the recess 22, the first housing part 20 and the second housing part 30 mate each other to form a rectangular housing 10. The shape and size of the housing 10 may be changed depending on the shape and size of the body of tablet PC 1. The first housing part 20 has a second hinge 23 on the side in which the recess 22 is formed, which is hinged with one side of the second housing part 30 in which the projection part 32 is formed.

The projection part 32 is preferably formed at the center of the housing 10, and positioned corresponding to the symbol logo 2 formed at the center of the rear side of the tablet PC 1. Preferably, the projection part 32 may have a light transmissive window or an opening so that the symbol logo 2 should be recognized from outsides. Alternatively, the projection part 32 or the housing 10 themselves may be made of transparent material so that the symbol logo 2 can be easily recognized. The side walls 12 formed on the second housing part 30 include inward projections 13 to cover the front edge of the tablet PC. A locking projection 14 is formed on the predetermined position of the side wall 12 of the second housing part 30.

The cover 40 has the shape and material corresponding to the housing 10, and the one side of the cover 40 is hinged on the first hinge 21 of the first housing part 20 and is rotated to cover the front side of the housing 10 to form a space to accommodate the tablet PC 1. On the other side of the cover 40 is formed a stopper projection 41 to wrap around the side wall 12 of the housing 10. The stopper projection 41 may be formed by bending or curving from the cover 40, or it may be formed to be foldable. The side wall 12 may be omitted or cut out on the second housing part 30 corresponding to the stopper projection 41, so that the stopper projection 41 may wrap around the tablet PC 1 directly. A locking hole 42 is formed on the stopper projection 41 at the position corresponding to the locking projection 14 on the side wall 12 of the second housing part 30. When the cover 40 is closed, the locking projection 14 is elastically engaged with the locking hole 42 in the manner of one touch operation. The locking mechanism as mentioned above is merely an example, and other types of one touch locking mechanism may be adopted. The material of the housing 10 and the cover 40 may be plastic or metal or leather. If the leather is used, an inner board of hard plastic or metal can be inserted inside the leather.

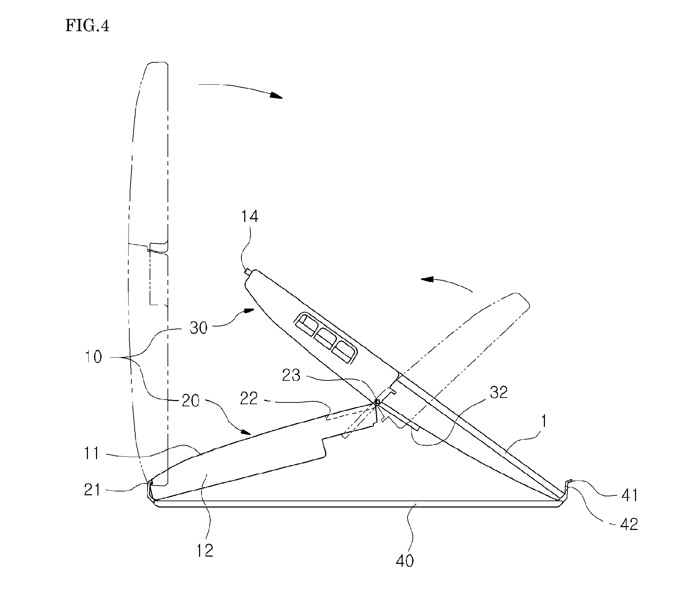

The operation of the invention is now described with reference to FIG, 3 and FIG. 4. In the state that the first housing part 20 and the second housing part 30 are folded out flat, the tablet PC 1 cannot be inserted into the housing 10 due to the interference of the inward projection 13. Therefore, as the second housing part 30 is folded at the second hinge 23 to some degree, the tablet PC 1 can be inserted into one end of the second housing part 30 to be received in the housing 10.

The operation of supporting the tablet PC 1 with the angle of easy view of the user is described with reference to FIG. 4. At the state that the cover 40 is closed to the housing 10, the user pushes the stopper projection 41 to the opening direction, and the locking projection 14 is released from the locking hole 42, and the cover 40 is removed from the housing 10. The removed cover 40 is further rotated around the first hinge 21 and is placed on the floor of the table. Then the stopper projection 41 of the cover 40 is projected upward. And the second housing part 30 is rotated around the second hinge 23 to come close to the back surface of the first housing part 20. At the same time, the first housing part 20 is rotated around the first hinge 21 to come close to the cover 40. If the lower end of the tablet PC 1 moves to and is restricted at the stopper projection 41 of the cover 40, then the tablet PC 1 is supported in the inclined state and the front display panel faces slantingly upward. Then the user can use the tablet PC 1. If the user wants to receive the tablet PC 1 in the case, then the reverse process of the above mentioned supporting operation may be taken.

According to the invention, the tablet PC 1 can be safely protected from the outer impact because the tablet PC 1 is received in the case of hard material. As the housing 10 and the cover 40 can be engaged to each other and opened by one touch operation, the use is very simple and convenient, and the safety is enhanced because the unwanted opening is prevented. And the supporting operation is very easy because the supporting operation is finished by only rotating the second housing part 30 to some degree after the cover 40 is placed on the floor of the table. As the housing 10 comprises the first housing part 20 and the second housing part 30 hinged to each other, and the first housing part 20 is rotated to support the tablet PC 1 in the inclined state, no more supporting member is required, which will result in the reduction of material cost, slim size with reduced thickness, and smart appearance and design without superfluous supporting member.

## Claims

1. A case of tablet PC having a display area on the front side which comprises;
a housing made of hard material to receive the tablet PC as the front side display of it is exposed, including a first housing part having the first hinge on one side and the second hinge on the other side, and a second housing part hinged on the second hinge of the first housing part to be rotated toward the back side of the first housing part, and
a cover made of hard material and hinged on the first hinge of the housing on one side to open and close the front side display of the tablet PC and having a stopper projection on the other side,
the second housing part including side walls to wrap around the side of the tablet PC, and the side walls having inward projections to cover the front edge of the tablet PC,
so that when the cover is released from the housing and placed on the surface of the table, and the second housing part is rotated around the second hinge, then the tablet PC is rotated together with the second housing part until the lower end of the tablet PC is stopped at the stopper projection of the cover, then the tablet PC should be supported in the inclined state as the first housing part supports the tablet PC in an angled position.

2. A case of tablet PC of claim 1 wherein, the stopper projection of the cover can be engaged with the side wall of the second housing part in the manner of one touch engagement when the cover is closed to the housing.

3. A case of tablet PC of claim 1 or 2, wherein, a projection part is formed on the first housing part or the second housing part to cover the symbol logo formed on the back surface of the tablet PC, and a recess mated to the projection part is formed on the second housing part or the first housing part, and a transmissive window or an opening is formed at the projection part.
